# EUROPÄISCHE PATENTANMELDUNG

(11) **EP 4 629 161 A2**
(43) Veröffentlichungstag der Anmeldung: **08.10.2025**
(21) Anmeldenummer: 25196108.2
(22) Anmeldetag: 18.02.2022
(51) Int. Cl.: G06Q 50/40

(54) **SYSTEM SOWIE VERFAHREN ZUM PRIORISIEREN VON NAVIGATIONSZIELEN VON FAHRZEUGEN**

(30) Priorität: 18.02.2021 DE 102021103806
(62) Teilanmeldung aus: 22157405.6
(71) Anmelder: 4.screen GmbH, 80809 München (DE)
(72) Erfinder: Beste, Fabian, 80798 München (DE); Hecker, Simon, 8047 Zürich (CH); Mahlert, Christoph, 81547 München (DE)
(74) Vertreter: Meissner Bolte Partnerschaft mbB

(57) **Zusammenfassung**

Die Erfindung betrifft ein System zum Priorisieren von Navigationszielen von Fahrzeugen, Folgendes aufweisend:
- eine Kommunikationseinheit (E), die dazu ausgebildet ist, mindestens eine Navigationsanfrage (N1, N2, N3) von mindestens einer Fahrzeug-Recheneinheit (C1, C2, C3) zu empfangen, wobei der mindestens einen Navigationsanfrage (N1, N2, N3) mindestens eine Fahrzeug (F1)- und/oder Fahrerinformation (L1) zugeordnet ist,
- einen Angebotsserver (S), auf dem eine Vielzahl von Angeboten (O1, O2, O3) gespeichert sind, wobei jeweils einem Angebot (O1, O2, O3) eine Vielzahl von Angebotsparametern, umfassend einen Angebotsort, zugeordnet sind;
- eine Server-Recheneinheit (K), die dazu ausgebildet ist,
a) eine Auswahl von Angeboten basierend auf der Navigationsanfrage (N1, N2, N3) zu bestimmen;
b) den Angeboten der Auswahl von Angeboten unter Berücksichtigung der Angebotsparameter und mindestens einer Fahrzeug- und/oder Fahrerinformation der Navigationsanfrage (N1, N2, N3) einen Prioritätswert zuzuordnen; und
c) die zugeordneten Prioritätswerte in Reaktion auf die Navigationsanfrage (N1, N2, N3) an die mindestens eine Fahrzeug-Recheneinheit (C1, C2, C3) zu senden, um die mindestens eine Fahrzeug-Recheneinheit (C1, C2, C3) dazu zu veranlassen, mindestens ein Navigationsziel unter Nutzung des Prioritätswerts zu priorisieren,

wobei das System autonome Fahrzeuge mit jeweils mindestens einer Fahrzeug-Recheneinheit (C1, C2, C3) umfasst;
wobei die mindestens eine Navigationsanfrage (N1, N2, N3) eine Fahrzeuginformation (F1) umfasst, die angibt, dass ein Parkplatz (P) für ein Fahrzeug benötigt wird,
wobei die Angebotsparameter der Angebote (O1, O2, O3) eine Parkplatzkapazität an dem jeweiligen Angebotsort umfassen,
wobei die mindestens eine Fahrzeug-Recheneinheit (C1, C2, C3) ausgebildet ist, basierend auf dem priorisierten Navigationsziel, eine Navigation zu einem entsprechenden Angebotsort gemäß einem Angebot (O3) mit verfügbaren Parkplätzen zu initialisieren, um das Fahrzeug dort zu parken.

## Beschreibung

Die vorliegende Erfindung betrifft ein System zum Priorisieren von Navigationszielen von Fahrzeugen gemäß Anspruch 1 sowie ein entsprechendes Verfahren gemäß Anspruch 9.

In modernen Fahrzeugen werden regelmäßig Navigationssysteme eingesetzt, die es dem Fahrer des Fahrzeugs ermöglichen, zu einem Navigationsziel zu navigieren.

Üblicherweise kann ein Fahrer (oder ein Fahrzeuginsasse) in einem Navigationssystem des Fahrzeugs nach "points of interest" suchen. Beispielsweise kann der Fahrer etwa nach "Restaurants" suchen und erhält eine Liste mit Restaurants, wobei eine derartige Liste absteigend nach Entfernung der Restaurants sortiert ist. Selbiges gilt für Tankstellen, Supermärkte, Arztpraxen oder Geschäfte des Einzelhandels oder jedwede andere Art eines Angebotsorts.

Diese Art von Vorschlägen von Navigationszielen, wobei lediglich eine Entfernung der Ziele von einem entsprechenden Fahrzeug berücksichtigt wird, wird als verbesserungswürdig und ineffizient angesehen. Insbesondere weil die bloße Berücksichtigung der Entfernung eines Ziels regelmäßig dazu führt, dass eine Erwartung an ein Angebot an dem nächstliegenden Ziel (oder an einem nahegelegenen Ziel) den Bedürfnissen oder Erwartungen des Fahrers nicht gerecht wird. In Folge dessen führt dies dazu, dass sich ein Fahrer selbstständig auf die Suche nach alternativen Angeboten macht bzw. machen muss und so Umwege zu einem alternativen (evtl. gar nicht vorgeschlagenen) Ziel in Kauf nehmen muss, um an dem alternativen Ziel ein Angebot zu finden, das seinen Erwartungen oder Bedürfnissen gerecht wird. Diese Umwege bedingen fahrzeugseitig einen unverhältnismäßigen Treibstoff- bzw. Energieverbrauch.

Andererseits kann es - speziell in Ballungsräumen mit vielen Läden, Restaurants, etc. - dazu kommen, dass bei einer begrenzten Displaygröße eines Navigationssystems nicht alle relevanten Ziele oder Zielvorschläge auf einmal (oder auf einer Seite) angezeigt werden können. Daher ergibt sich zudem ein Bedarf, eine konkrete Auswahl von Angeboten zu ermitteln und einem Fahrer so möglichst bedarfsgerechte Angebote anzuzeigen. Somit kann die Interaktion zwischen dem Benutzer und dem Navigationssystem effizienter gestaltet werden. Eingabefehler, die beispielswiese in Verbindung mit Touchscreens häufig auftreten, werden vermieden.

Eine Aufgabe der vorliegenden Erfindung ist es daher, ein System sowie ein entsprechendes Verfahren bereitzustellen, das es ermöglicht, Navigationsziele für Fahrzeuge effizient und situationsgerecht vorzuschlagen.

Diese Aufgabe wird erfindungsgemäß durch ein Verfahren gemäß Anspruch 1, ein computerlesbares Speichermedium gemäß dem Anspruch 9 und einen Computerprogrammcode gemäß Anspruch 14 gelöst.

Insbesondere wird die Aufgabe durch ein System zum Priorisieren von Navigationszielen von Fahrzeugen gelöst, wobei das System Folgendes aufweist:
- eine Kommunikationseinheit, die dazu ausgebildet ist, mindestens eine Navigationsanfrage von mindestens einer Fahrzeug-Recheneinheit zu empfangen, wobei der mindestens einen Navigationsanfrage mindestens eine Fahrzeuginformation und/oder eine Fahrerinformation zugeordnet ist,
- einen Angebotsserver, auf dem eine Vielzahl von Angeboten gespeichert sind, wobei jeweils einem Angebot eine Vielzahl von Angebotsparametern, umfassend einen Angebotsort, zugeordnet sind;
- eine Server-Recheneinheit, die dazu ausgebildet ist,
   a) eine Auswahl von Angeboten basierend auf der Navigationsanfrage zu bestimmen;
   b) den Angeboten der Auswahl von Angeboten unter Berücksichtigung der Angebotsparameter und mindestens einer Fahrzeug- und/oder Fahrerinformation der Navigationsanfrage einen Prioritätswert zuzuordnen; und
   c) die zugeordneten Prioritätswerte in Reaktion auf die Navigationsanfrage an die mindestens eine Fahrzeug-Recheneinheit zu senden, um die mindestens eine Fahrzeug-Recheneinheit dazu zu veranlassen, mindestens ein Navigationsziel unter Nutzung des Prioritätswerts zu priorisieren.

Ein wesentlicher Gedanke der Erfindung besteht darin, unter Berücksichtigung von fahrzeugspezifischen und/oder fahrerspezifischen Daten, Ziele mittels eines Fahrzeug-Navigationssystems vorzuschlagen oder zu initialisieren. Diese Navigationsziele können einerseits entsprechend den Interessen, Vorlieben oder Geschmäckern eines Fahrers oder Fahrgastes priorisiert werden und andererseits ebenso fahrzeugspezifische Kriterien bei der Priorisierung der Navigationsziele berücksichtigen. Gleichzeitig wird Anbietern von Angeboten (also beispielsweise Tankstellenbetreibern, Restaurantbetreibern, Supermarktbetreibern, etc.) die Möglichkeit gegeben entsprechende Angebotsparameter für das Priorisieren von Navigationsanfragen bereitzustellen. Beispielsweise kann ein Restaurantbetreiber einen Angebotsparameter bereitstellen, dass das Restaurant über mindestens eine (momentan freie) Ladesäule verfügt. Sucht ein Fahrer eines Fahrzeugs mit geringem Ladezustand nach einem Restaurant, so wird beispielsweise ein Navigationsziel für das Restaurant mit der Ladesäule gegenüber Restaurants ohne Ladesäule priorisiert. Durch derart auf die konkrete Situation angepasste Vorschläge für Navigationsziele kann eine Wegstrecke für den Fahrer effizient minimiert werden, um Treibstoff oder Energie zu sparen. Gleichzeitig können Anbieter auf einer entsprechenden webbasierten Plattform des Angebotsservers auch Angebotsparameter für entsprechende Zielgruppen hinterlegen bzw. angeben, um die vorgeschlagenen Navigationsziele dieser Zielgruppen entsprechend zu priorisieren. Derart können Anbieter von Luxusgütern oder Luxusdienstleistungen beispielsweise Angebotsparameter definieren, die Fahrer von Oberklassefahrzeugen ansprechen. Anbieter von kinderfreundlichen Restaurants (oder anderen Angeboten) können beispielsweise Angebotsparameter hinterlegen, die Fahrer von Familienfahrzeugen ansprechen. Wobei hierzu beispielsweise Angebotsparameter hinterlegt werden können, die auf konkrete Fahrzeuginformationen gerichtet sind und beispielsweise angeben, dass es sich bei dem Fahrzeug(modell) beispielsweise um einen (Kompakt)bus wie einen Minivan handeln soll, oder dass in dem Fahrzeug mindestens 3 oder 4 Insassen sitzen, was über entsprechende fahrzeugseitige Kraftsensoren in den Fahrzeugsitzen ermittelt wird bzw. ermittelt werden kann.

Unter einem Prioritätswert ist ein beispielsweise numerischer Wert zu verstehen, der sich auf Grund einer Übereinstimmung von Angebot(sort) und (Navigations)-Anfrage unter Berücksichtigung von Fahrer- und/oder Fahrzeuginformationen und Angebotsparametern ergibt. Ein hoher Prioritätswert für ein Navigationsziel bedeutet, dass Angebot und fahrerseitiger Bedarf (entsprechend der Anfrage) hier weitgehend übereinstimmen. Alternativ kann ein Prioritätswert im Sinne der Erfindung so definiert sein, dass ein hoher oder niedriger Prioritätswert dazu führt, dass das das Ergebnis so angezeigt oder übergeben wird, dass die Auswahl eines Ergebnisses mit hohem Prioritätswert wahrscheinlicher ist als die Auswahl eines Ergebnisses mit einem niedrigeren Prioritätswert.

Unter einem Fahrer wird im Rahmen dieser Anmeldung ein tastsächlicher Fahrer aber beispielsweise auch ein Beifahrer oder generell ein Fahrzeuginsasse verstanden. Dies gilt entsprechend für Fahrer bzw. Fahrzeuginsassen von autonom fahrenden Fahrzeugen.

Beispielsweise kann ein priorisiertes Navigationsziel (also ein Angebot bzw. Ziel mit höchstem Prioritätswert) dem Fahrer als erstes (oberstes) Ziel einer Liste oder als einziges Ziel angezeigt/vorgeschlagen werden. Alternativ kann auch direkt eine Navigation des Fahrzeugs zu dem priorisierten Navigationsziel initialisiert werden, ohne dass es einer Interaktion des Fahrers und/oder anderer Fahrzeuginsassen bedarf.

In einer Ausführungsform ist die Kommunikationseinheit dazu ausgebildet, Ergebnisinformationen von der mindestens einen Fahrzeug-Recheneinheit zu empfangen, wobei die Ergebnisinformationen insbesondere Informationen umfassen, die angeben, ob ein entsprechendes Fahrzeug einen Angebotsort eines entsprechenden Angebotes angefahren hat, und/oder entsprechende Aufenthaltszeiten an dem Angebotsort angeben, und/oder angeben, ob eine Transaktion, insbesondere am Angebotsort stattgefunden hat.

Durch ein entsprechend positives oder negatives Ergebnis können die Fahrer- und/oder Fahrzeuginformationen entsprechend aktualisiert werden. Ein positives Ergebnis kann dabei eine Transaktion am Angebotsort sein (beispielsweise ein Kauf einer Ware oder Dienstleistung oder Ähnliches). Ein negatives Ergebnis kann beispielsweise sein, dass das priorisierte Navigationsziel bzw. der entsprechende Angebotsort gar nicht angefahren bzw. umfahren wurde. Ein negatives Ergebnis kann weiterhin sein, dass das Navigationsziel zwar angezeigt, aber nicht ausgewählt wurde.

Nachfolgende Navigationsanfragen dieses Fahrers (oder eines anderen Fahrers) können unter Berücksichtigung dieser Ergebnisinformation(en) für den Fahrer optimiert werden. Hierfür kann die Recheneinheit ein selbstlernendes System, wie beispielsweise ein neuronales Netz, aufweisen. Das selbstlernende System kann anhand einer Vielzahl von Fahrerinformationen und Fahrzeuginformationen sowie Ergebnisinformationen entsprechende Fahrerprofile erzeugen und so zukünftige Navigationsziele in Bezug auf zukünftige Navigationsanfragen für Fahrer entsprechend dem jeweiligen Fahrerprofil weiter optimieren. Einerseits kann derart die Auswahl von Angeboten oder die Zuordnung eines Prioritätswertes verbessert werden. So können Umwege vermieden werden und ein Treibstoffverbrauch oder ein Energieverbrauch eines Fahrzeugs reduziert werden. Zudem ist es möglich, ein Feedback für Anbieter der Angebote zu erstellen - derart kann ein Anbieter eine Optimierung der Angebotsparameter vornehmen. Insgesamt wird dadurch die Gesamtperformance des Systems weiter verbessert und die Vorschläge für Navigationsziele werden somit verbessert.

In einer Ausführungsform umfasst das System Fahrzeuge mit jeweils mindestens einer Fahrzeug-Recheneinheit.

Dadurch wird es ermöglicht, dass die Fahrzeug-Recheneinheit eines Fahrzeugs Daten abrufen und an die Kommunikationseinheit übermitteln kann. Ferner können mittels einer Fahrzeug-Recheneinheit und entsprechender Fahrzeug-Sensoren Sensorsignale erfasst werden und so weitere Fahrer- und/oder Fahrzeuginformationen gewonnen werden, die ggf. an die Kommunikationseinheit übermittelt werden können. Insgesamt werden die Vorschläge für Navigationsziele somit deutlich verbessert - im Hinblick auf Fahrerinteressen oder Bedürfnisse oder fahrzeugspezifische Notwendigkeiten wie Tanken, Laden, Waschen, Reifenwechsel, etc.

In einer Ausführungsform ist die mindestens eine Fahrzeug-Recheneinheit dazu ausgebildet, Sensorsignale von Fahrzeug-Sensoren zu erfassen und/oder auszuwerten und basierend auf den Sensorsignalen die Ergebnisinformationen zu bestimmen, sowie die Ergebnisinformationen an die Kommunikationseinheit zu übermitteln.

Die Sensorsignale von Fahrzeug-Sensoren sind leicht und kostengünstig zugänglich, da diese meist ohnehin in den Fahrzeugen erfasst und verwendet werden. Dadurch lässt sich das System mit vergleichsweise geringem Aufwand betreiben. Dadurch wird die Gesamtperformance des Systems weiter verbessert und die Vorschläge für Navigationsziele werden somit optimiert.

In einer Ausführungsform weist das Fahrzeug Fahrzeugsensoren auf, beispielsweise Positionssensoren, Füllstandsensoren, Kraftsensoren, und die mindestens eine Fahrzeug-Recheneinheit ist dazu ausgebildet, die Fahrzeuginformationen und/oder die Fahrerinformationen zumindest teilweise unter Verwendung von Sensorsignalen mindestens eines der Fahrzeug-Sensoren zu übermitteln.

Die meisten Fahrzeuge umfassen derartige Sensoren bereits ab Werk - Positionssensoren (beispielsweise GPS-Sensoren) zur Bestimmung einer Fahrzeug-Position, Füllstandsensoren zur Bestimmung eines Lade- und/oder Tankfüllstands Kraftsensoren in den Sitzen zur Bestimmung einer Anzahl der Fahrzeuginsassen, oder mindestens eine Innenraumkamera zur Bestimmung einer Anzahl der Fahrzeuginsassen aber beispielsweise auch zur Bestimmung eines oder mehrerer weiterer Parameter wie Emotionen, Geschlecht oder Alter des oder der Fahrzeuginsassen. Daher lässt sich die Berücksichtigung der entsprechenden Sensorsignale der Fahrzeug-Sensoren kostengünstig und mit geringem zusätzlichen Aufwand benutzen, um Navigationsziele situationsgerecht zur priorisieren. Beispielsweise kann so ein Vorschlag für ein Navigationsziel in Abhängigkeit einer Anzahl der Fahrzeuginsassen und/oder eines Lade- oder Tankfüllstands optimiert werden. Alternativ oder zusätzlich ist es möglich, dass Sensorsignale als auslösendes Ereignis zum Versenden einer Navigationsanfrage herangezogen werden - beispielsweise bei niedrigem Tankfüllstand oder einem fast leeren Akku. Derart lassen sich Umwege vermeiden und so Treibstoff oder Energie einsparen.

In einer Ausführungsform ist/sind die Server-Recheneinheit und/oder die mindestens eine Fahrzeug-Recheneinheit dazu ausgebildet, die Vielzahl von Angeboten entsprechend dem jeweiligen Prioritätswert zu filtern, derart, dass nur Angebote und/oder Prioritätswerte über einer Prioritätswertgrenze beim Senden an die Fahrzeug-Recheneinheit berücksichtigt werden.

Derart können dem Fahrer nur die relevantesten Angebote - also die Navigationsziele mit dem höchsten Prioritätswert - beispielsweise nur eines, oder zwei oder nur die ersten drei - angezeigt werden. Insgesamt wird dadurch die Handhabung des Systems verbessert. Dies ist speziell bei beschränkten Displaygrößen in dem Fahrzeug von Vorteil, da eine Auswahl von Navigationszielen sich so auf die wesentlichsten Ziele (mit dem höchsten Prioritätswert) beschränken lassen. So wird einem Fahrer die Auswahl eines Zieles erleichtert.

In einer Ausführungsform ist die mindestens eine Fahrzeug-Recheneinheit dazu ausgebildet, eine Angebotsverifizierungsinformation an ein Nutzerendgerät zu übermitteln, derart, dass eine Transaktion an dem Angebotsort, insbesondere an einer Kasse an dem Angebotsort, außerhalb des Fahrzeugs durch einen Anbieter verifiziert werden kann.

Auf diese Weise können Daten bzw. Informationen generiert werden, die den Erfolg einer Auswahl von Angeboten und/oder einer entsprechenden Priorisierung von Navigationszielen messen. So lässt sich insgesamt die Performance des Systems optimieren, da die generierten Daten bzw. Informationen bei einer nachfolgenden Auswahl von Angeboten und/oder einer entsprechenden Priorisierung von Navigationszielen berücksichtigt werden können. Fährt beispielsweise ein Fahrer nie ein spezielles Navigationsziel an oder tätigt dort nie einen Einkauf oder eine sonstige Transaktion, so wird das Interesse des Fahrers für dieses Angebot oder Navigationsziel als gering eingestuft und in den dem Fahrer zugeordneten Fahrerinformationen hinterlegt. Bei nachfolgenden Navigationsanfragen dieses Fahrers kann das entsprechende Ziel dann entweder gar nicht mehr oder mit einem geringeren Prioritätswert berücksichtigt werden. Durch die Angebotsverifizierungsinformation kann zudem auch eine Kundenbindung bzw. Kundenbeziehung zwischen Anbieter und Fahrer verbessert werden. Beispielsweise ist es denkbar, dass ein Angebotsparameter ein für den Fahrer vergünstigtes Laden/Tanken und/oder einen Gratiskaffee für einen entsprechenden Einkauf beinhaltet und den Fahrer hierauf hinweist. Über eine entsprechende App auf einem Nutzerendgerät kann der Fahrer die Angebotsverifizierungsinformation (beispielsweise ein QR-Code) an dem Angebotsort (beispielsweise an einer Kasse) vorzeigen, um die entsprechende Vergünstigung zu erhalten. So wird die Handhabung des Systems besonders anwender- und anbieterfreundlich. In einer alternativen Ausführungsform kann der Fahrer (aktiv) nach einem derartigen Angebotsparameter suchen (eine entsprechende Navigationsanfrage versenden), also beispielsweise nach einem Angebotsparameter, der den Fahrer auf eine subventionierte (vergünstigte) Ladestation hinweist. Hierfür kann der Fahrer auch weitere Fahrer- und/oder Fahrzeuginformationen zu der Navigationsanfrage hinzufügen. Beispielsweise kann der Fahrer so nach subventionierten Ladestationen entlang (oder in der Nähe) seiner Route suchen.

In einer Ausführungsform ist die Fahrzeugrecheneinheit dazu ausgebildet, eine Fahrzeug-Interaktionsvorrichtung dazu zu veranlassen, mindestens ein priorisiertes Navigationsziel, und vorzugsweise eine Angebotsinformation, darzustellen, insbesondere derart, dass das mindestens eine priorisierte Navigationsziel mittels der Fahrzeug-Interaktionsvorrichtung auswählbar ist, um eine Navigation zu einem priorisierten Navigationsziel zu initialisieren.

Derart wird dem Fahrer oder dem Fahrzeuginsassen die Auswahl des Navigationsziels mitgeteilt und angezeigt. Bei Interesse oder Bedarf kann der Fahrer oder Fahrzeuginsasse das Navigationsziel auswählen und so eine Navigation mit dem Fahrzeug zu dem Navigationsziel initialisieren. Ferner wird dem Anbieter des Angebots die Möglichkeit gegeben, mittels einer Angebotsinformation für das Angebot zu werben. Beispielsweise kann die Angebotsinformation für das Navigationsziel nützliche Informationen (wie z.B. "Ladesäule vorhanden") oder Werbeangebote wie Rabattaktionen umfassen. Insgesamt wird die Auswahl von Navigationszielen so vergleichsweise informativ und verbessert. Andererseits kann auf diese Weise das priorisierte Navigationsziel auf fahrzeug- und/oder fahrerspezifische Interessen des Fahrers oder der Fahrzeuginsassen zugeschnitten werden - beispielsweise kann eine Ladesäule oder eine Tankstelle für Fahrer eines Luxusklassefahrzeugs priorisiert werden, falls ein Luxus-Café in der Umgebung der Ladesäule oder Tankstelle ist. Letztlich entscheidet sich der Fahrer für eine (existente) verfügbare, ggf. (durch einen entsprechenden Anbieter) gesponserte für ihn persönlich relevante Ladesäule oder Tankstelle in der Nähe von für ihn relevanten Möglichkeiten oder Anbietern (wie beispielsweise Geschäften, Cafés oder Ähnliches).

In einer Ausführungsform ist die mindestens eine Fahrzeug-Recheneinheit dazu ausgebildet, Sensorsignale von Fahrzeug-Sensoren, beispielsweise akustische oder optische Sensoren und/oder Müdigkeitssensoren und/oder Füllstandsensoren, zu erfassen und/oder auszuwerten und basierend auf den Sensorsignalen (und einer entsprechenden Interpretation der Sensorsignale) mindestens eine Navigationsanfrage an die Kommunikationseinheit zu senden.

Auf diese Art erhält der Fahrer (automatisch) hilfreiche und ggf. fahrzeug- bzw. fahrerspezifische Navigationshinweise. Beispielsweise wird der Fahrer bei einem leeren Tank/Akku des Fahrzeugs zu einer Tankstelle/Ladesäule eines Anbieters navigiert oder erhält einen entsprechenden Vorschlag hierfür. Entsprechend kann, wenn eine Fahrermüdigkeit erfasst wird, ein Vorschlag für eine Navigation zu einem Café oder einem Rastplatz eines Anbieters angezeigt oder initialisiert werden. Besonders in fremden Regionen kann dies für den Fahrer hilfreich sein. So kann eine Fahrstrecke optimiert und dadurch Kraftstoff oder elektrische Energie gespart werden. Gleichfalls ist es möglich, mit den akustischen Sensoren beispielsweise Reizwort eines Gesprächs bzw. einer Spracheingabe oder des Radios im Fahrgastraum zu erkennen und entsprechende Navigationsanfragen zu versenden und Navigationsziele vorzuschlagen oder die Navigation entsprechend zu initialisieren. Insgesamt wird die Verwendung des Systems zur Priorisierung von Navigationszielen dadurch besonders dynamisch und anwenderfreundlich.

In einer Ausführungsform ist die Fahrzeug-Recheneinheit dazu ausgebildet, basierend auf den Sensorsignalen mindestens eines der Fahrzeug-Sensoren eine Fahrgastmüdigkeit zu erkennen und/oder einen Tank- oder Ladezustand zu erkennen und/oder ein Objekt in der Umgebung des Fahrzeugs zu erkennen und/oder ein Reizwort in dem Fahrgastraum zu erkennen.

Dadurch wird das Priorisieren von Navigationszielen besonders an die Bedürfnisse des Fahrers angepasst. Insgesamt ergibt sich so eine komfortable Navigation.

Insbesondere wird die erfindungsgemäße Aufgabe auch durch ein Verfahren zum Priorisieren von Navigationszielen von Fahrzeugen gelöst, wobei das Verfahren Folgende Schritte umfasst:
- Empfangen mindestens einer Navigationsanfrage von mindestens einer Fahrzeug-Recheneinheit eines Fahrzeugs, wobei der mindestens einen Navigationsanfrage mindestens eine Fahrzeug- und/oder Fahrerinformationen zugeordnet ist, mittels einer Kommunikationseinheit;
- Bereitstellen einer Vielzahl von Angeboten auf einem Angebotsserver, wobei jeweils einem Angebot eine Vielzahl von Angebotsparametern, umfassend einen Angebotsort, zugeordnet sind;
- Bestimmen einer Auswahl von Angeboten basierend auf der mindestens einen Navigationsanfrage;
- Zuordnen von Prioritätswerten, unter Berücksichtigung der Angebotsparameter und mindestens einer Fahrzeug- und/oder Fahrerinformation der Navigationsanfrage, zu den Angeboten der Auswahl von Angeboten;
- Senden der zugeordneten Prioritätswerte in Reaktion auf die Navigationsanfrage an die mindestens eine Fahrzeug-Recheneinheit;
- Priorisieren eines Navigationsziels unter Nutzung der Prioritätswerte.

Hieraus ergeben sich dieselben Vorteile wie sie bereits in Zusammenhang mit dem System zum Priorisieren von Navigationszielen von Fahrzeugen beschrieben wurden.

Das Verfahren kann insbesondere unter Verwendung des beschriebenen Systems umgesetzt werden. Daher sei darauf hingewiesen, dass die im Rahmen des erfindungsgemäßen Systems beschriebenen Merkmale und Vorteile auch auf das erfindungsgemäße Verfahren zum Priorisieren von Navigationszielen für Fahrzeuge zutreffen. Merkmale des Systems, insbesondere solche, die das Erfassen von Sensorsignalen oder Versenden/Empfangen von Navigationsanfragen oder Informationen mittels der Fahrzeug-Recheneinheit oder der Kommunikationseinheit bzw. Recheneinheit oder des Angebotsservers betreffen, sind auf das erfindungsgemäße Verfahren übertragbar. Ebenso sind Merkmale des erfindungsgemäßen Verfahrens auf das erfindungsgemäße System übertragbar, indem die entsprechende Einrichtung derart konfiguriert wird, dass sie zur Ausführung der entsprechenden Verfahrensmerkmale geeignet ist.

In einer Ausführungsform umfasst das Verfahren einen Schritt zum Empfangen von Ergebnisinformationen von der mindestens einen Fahrzeug-Recheneinheit mit der Kommunikationseinheit, wobei die Ergebnisinformationen insbesondere Informationen umfassen, die angeben, ob ein entsprechendes Fahrzeug einen Angebotsort eines entsprechenden Angebotes angefahren hat, und/oder entsprechende Aufenthaltszeiten an dem Angebotsort angeben, und/oder angeben, ob eine Transaktion an dem Angebotszielort getätigt wurde.

In einer Ausführungsform wird die mindestens eine Navigationsanfrage in Reaktion auf eine durch einen Müdigkeitssensor erkannte Fahrgastmüdigkeit und/oder durch einen akustischen Sensor erkanntes akustisches Signal bzw. Signalfolge, insbesondere Reizwort im Fahrgastraum, versendet.

In einer Ausführungsform wird die mindestens eine Navigationsanfrage in Reaktion auf eine Erkennung eines Objekts durch einen optischen Sensor in der Fahrzeugumgebung versendet.

In einer Ausführungsform wird die mindestens eine Navigationsanfrage in Reaktion auf eine durch einen Füllstandsensor erkannten geringen Akkuladezustand und/oder geringen Tankfüllzustand versendet.

Insbesondere wird die erfindungsgemäße Aufgabe auch durch ein computerlesbares (Speicher)medium, umfassend Instruktionen, die bei der Ausführung durch mindestens eine Recheneinheit diese veranlassen, ein Verfahren wie vorab beschrieben zu implementieren.

Auch hieraus ergeben sich dieselben Vorteile wie sie bereits in Zusammenhang mit dem Verfahren und/oder mit dem computerlesbaren Speichermedium und/oder mit dem Computerprogrammcode beschrieben wurden.

Weitere vorteilhafte Ausführungsformen ergeben sich anhand der Unteransprüche.

Nachfolgend wird die Erfindung auch hinsichtlich weiterer Merkmale und Vorteile anhand von Ausführungsbeispielen beschrieben, die anhand von Abbildungen näher erläutert werden.

Hierbei zeigt:
- Fig. 1: ein schematisches Ausführungsbeispiel eines Ablaufs eines Systems zum Priorisieren von Navigationszielen von Fahrzeugen;
- Fig. 2: ein schematisches Ausführungsbeispiel zum Priorisieren eines Navigationsziels auf Grund einer Fahrerinformation unter Berücksichtigung von Fahrzeuginformationen;
- Fig. 3: ein schematisches Ausführungsbeispiel zum Priorisieren eines Navigationsziels auf Grund einer Objekterkennung eines Objekts in der Fahrzeugumgebung unter Berücksichtigung von Fahrzeugparametern;
- Fig. 4: ein schematisches Ausführungsbeispiel zum Priorisieren eines Navigationsziels auf Grund einer Fahrerzeuginformation;
- Fig. 5: ein schematisches Ausführungsbeispiel zum Priorisieren eines Navigationsziels auf Grund einer Fahrerinformation.

In der nachfolgenden Beschreibung werden für gleiche und gleich wirkende Teile dieselben Bezugszeichen verwendet.

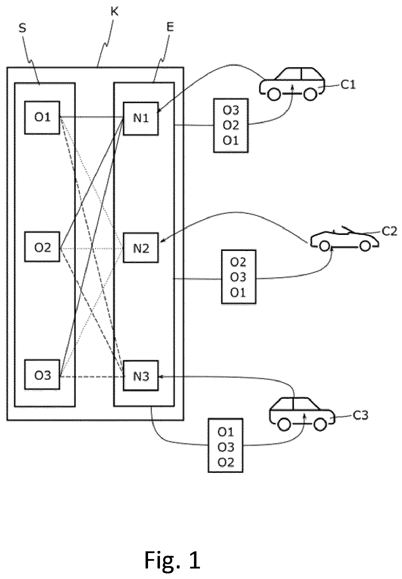

In Fig. 1 ist schematisch ein Ausführungsbeispiel eines Ablaufs eines Systems zum Priorisieren von Navigationszielen von Fahrzeugen dargestellt.

In dem gezeigten Beispiel sind drei Fahrzeuge mit jeweils einer Fahrzeug-Recheneinheit C1, C2, C3 dargestellt. Die Fahrzeug-Recheneinheiten C1, C2, C3 versenden jeweils eine Navigationsanfrage N1, N2, N3 an eine Kommunikationseinheit E, wobei der jeweiligen einen Navigationsanfrage N1, N2, N3 mindestens eine Fahrzeuginformation und/oder eine Fahrerinformation zugeordnet ist.

Die Fahrzeuginformationen umfassen fahrzeugspezifische oder fahrzeugrelevante Informationen. Diese Fahrzeuginformationen können beispielsweise sensorisch erfasste Werte von Fahrzeug-Sensoren in Bezug auf eine Position des Fahrzeugs, einen Tank- oder Ladezustand des Fahrzeugs, eine (momentane) Anzahl der Fahrzeuginsassen, eine Fahrzeitdauer, die angibt, wie lange das Fahrzeug seit dem letzten längeren Halt unterwegs ist oder weitere Informationen aus einem Fahrzeug-Datenspeicher, wie eine Fahrzeugmodellinformation (beispielsweise Modell, Hersteller, Baujahr), den letzten Servicetermin des Fahrzeugs, etc. umfassen.

Die Fahrerinformationen umfassen personenspezifische Daten des Fahrers oder des Fahrzeuginsassen. Diese können einerseits Angaben zu Alter, Geschlecht, Interessen oder Geschmäckern des Fahrers umfassen und andererseits momentane Bedürfnisse des Fahrers - also Bedürfnisse zum Zeitpunkt der Navigationsanfrage - umfassen. Ein momentanes Bedürfnis kann beispielsweise Hunger oder Durst des Fahrers oder eines Fahrzeuginsassen sein.

Auf einem Angebotsserver S gemäß dem Ausführungsbeispiel sind drei Angebote O1, O2, O3 von Anbietern hinterlegt. Die Anzahl drei dient natürlich lediglich als exemplarisches vereinfachtes Beispiel für eine Vielzahl von Angeboten. Diese Angebote O1, O2, O3 können von entsprechenden Anbietern über eine webbasierte Plattform auf dem Angebotsserver S hinterlegt werden, wobei jeweils einem Angebot eine Vielzahl von Angebotsparametern umfassend einen Angebotsort, zugeordnet sind.

Die Anbieter können beispielsweise Tankstellenbetreiber, Restaurantbetreiber, Supermarktbetreiber, Parkhausanbieter, Einzelhandel, Ladestationsanbieter, Tankstellenbetreiber, ATMs, Arztpraxen, Geschäfte des Einzelhandels Hotels oder Ähnliches sein.

Die Angebotsparameter können allgemein beispielsweise Informationen über Waren oder Dienstleistungen der Anbieter an dem Angebotsort umfassen. Die Angebotsparameter können beispielsweise Informationen umfassen, dass die Waren oder Dienstleistungen am Angebotsort auf Fahrer- bzw. Fahrzeug-Zielgruppen zugeschnitten sind - sich also (zumindest teilweise) mit den von der Fahrzeug-Recheneinheit C1, C2, C3 übermittelten Fahrzeuginformationen decken.

Eine Server-Recheneinheit K ist dazu ausgebildet, die Auswahl von den Angeboten O1, O2, O3 basierend auf den Navigationsanfragen N1, N2, N3 zu bestimmen; und den Angeboten O1, O2, O3 der Auswahl von Angeboten unter Berücksichtigung der Angebotsparameter und mindestens einer Fahrzeug- und/oder Fahrerinformation der Navigationsanfrage einen Prioritätswert zuzuordnen; und die zugeordneten Prioritätswerte in Reaktion auf die Navigationsanfrage N1, N2, N3 an die Fahrzeug-Recheneinheiten C1, C3, C3 zu senden, um die mindestens eine Fahrzeug-Recheneinheit C1, C2, C3 dazu zu veranlassen, mindestens ein Navigationsziel unter Nutzung des Prioritätswerts zu priorisieren.

In einem Ausführungsbeispiel sind die Server-Recheneinheit K, die Kommunikationseinheit E sowie der Angebotsserver S auf einer gemeinsamen Servereinheit eingerichtet. Alternativ können die Server-Recheneinheit K, die Kommunikationseinheit E sowie der Angebotsserver S auf verschiedenen (verteilten) Servereinheiten eingerichtet sein.

Wenn ein Angebot bzw. mindestens ein entsprechendes (priorisiertes) Navigationsziel im Fahrzeug angezeigt wird, entstehen mehrere Szenarien:
1) Das Angebot wurde ausgewählt und die Navigation zum Ziel wurde gestartet.
   a) Der Fahrzeuginsasse ist am Ziel angekommen,
   b) Der Fahrzeuginsasse hat die Navigation vor dem Ziel gestoppt.
   c) Der Fahrzeuginsasse hat das priorisierte Navigationsziel durch ein anderes Navigationsziel (mit niedrigerer Priorität) ersetzt.
2) Das Angebot oder das priorisierte Navigationsziel wurde ignoriert.
   a) Es wurde keine Navigation gestartet.
   b) Es wurde ein anderes Navigationsziel ausgewählt.

Jedes der obigen Szenarien wird von der Fahrzeug-Recheneinheit erfasst und an die Kommunikationseinheit E als Ergebnisinformation übermittelt. Eine solche Ergebnisinformation umfasst dabei eine Reihe von Kontextinformationen von dem Fahrzeug und/oder des Fahrzeuginsassen, wie z.B.:
- Alle Ziele, die dem Fahrzeuginsassen insgesamt zur Auswahl standen.
- Die Auswahl des (tatsächlichen) Navigationsziels, auch wenn es nicht das priorisierte Navigationsziel war.
- Ort und Zeitpunkt der Interaktion des Fahrzeuginsassen bzw. der Fahrzeug-Recheneinheit C1, C2, C3 mit der Kommunikationseinheit E.
- Fahrzeuginformationen von Fahrzeugsensoren zum Zeitpunkt der Interaktion des Fahrzeuginsassen bzw. der Fahrzeug-Recheneinheit C1, C2, C3 mit der Kommunikationseinheit E (z.B. Tank-/Ladestand, Anzahl der Insassen, aktive Kontrollleuchten, usw.).

Diese Kontextinformationen, welche von der Fahrzeug-Recheneinheit C1, C2, C3 an die Kommunikationseinheit E übermittelt werden, können auf der Server-Recheneinheit K zusätzlich mit Daten von externen Quellen korreliert werden, beispielsweise mit:
- Wetterinformation für die jeweilige Position des Fahrzeugs und/oder des entsprechenden Zeitpunkts,
- Verkehrsinformation für die jeweilige Position des Fahrzeugs und/oder des entsprechenden Zeitpunkts.

Die Server-Recheneinheit K kombiniert/korreliert individuelle und kollaborative Empfehlungssysteme zu einem sogenannten hybriden Empfehlungssystem. Dazu werden mehrere Recommender Algorithmen gewichtet oder hintereinander geschaltet ausgeführt. Dadurch werden Nachteile einzelner Ansätze durch die Integration weiterer Verfahren ausgeglichen.

Das individuelle Empfehlungssystem ermittelt nur auf Basis von Informationen über den (aktiven) Fahrzeuginsassen empfehlenswerte Angebote bzw. Navigationsziele. Dies geschieht mit Hilfe der individuellen Datenhistorie des Fahrzeugs und/oder Fahrzeuginsassen basierend auf früheren Fahrer- und/oder Fahrzeuginformationen L1, F1. So kann beispielsweise ermittelt werden, welche Angebote prinzipiell immer abgelehnt oder mit einer hohen Wahrscheinlichkeit angenommen werden.

Beim kollaborativen Empfehlungssystem (auch "kollaboratives Filtern") werden bei der Empfehlung auch Fahrer anderer Fahrzeuge berücksichtigt. Der Empfehlungsprozess zum Priorisieren eines Navigationsziels (beim kollaborativen Filtern) besteht grundsätzlich aus zwei Schritten:
1. Berechnen/Ermitteln einer Anzahl von Fahrzeuginsassen, die in der Vergangenheit ähnlich wie der aktive Fahrzeuginsasse bewertet haben (Nachbarschaft),
2. Auswahl von Navigationszielen bzw. Angeboten, die der aktive Fahrzeuginsasse noch nicht beurteilt/ausgewählt/angefahren hat, die aber in seiner Nachbarschaft als empfehlenswert bewertet wurden.

Zur Nachbarschaftsberechnung im 1. Schritt werden die Bewertungen des aktiven Fahrzeuginsassen mit denen der anderen Fahrzeuginsassen im System verglichen.

Das Ergebnis hybriden Empfehlungssystem ist ein Prioritätswert.

In einem Ausführungsbeispiel ist der Anbieter von Angebot O1 ein Betreiber eines Restaurants und der Anbieter von Angebot O2 ist ein Betreiber eines Imbiss-Betriebs.

Der Anbieter von Angebot O1 weiß beispielsweise, dass erfahrungsgemäß nur sehr selten oder nie einzelne Personen in sein Restaurant kommen und hinterlegt daher entsprechende Angebotsparameter auf dem Angebotsserver S, dass er speziell Fahrzeuge mit mehr als einem Fahrzeuginsassen ansprechen möchte.

Der Anbieter von Angebot O2 weiß beispielsweise, dass erfahrungsgemäß sehr häufig einzelne Personen für ein schnelles Essen zu seinem Imbiss kommen und hinterlegt daher entsprechende Angebotsparameter auf dem Angebotsserver S, dass er speziell Fahrzeuge mit einem (einzigen) Fahrzeuginsassen ansprechen möchte.

Die Erfassung der Anzahl von Fahrzeuginsassen kann fahrzeugseitig über entsprechende Fahrzeug-Sensoren, wie Kraftsensoren in den Fahrzeugsitzen, erfolgen. Die erfassten Sensorsignale der Fahrzeug-Sensoren werden mittels der jeweiligen Fahrzeug-Recheneinheit C1, C2, C3 mit den jeweiligen Navigationsanfragen N1, N2, N3 zu der Kommunikationseinheit E übermittelt.

Fahrzeug-Recheneinheit C3 erfasst beispielsweise über entsprechende Fahrzeug-Sensoren, dass sich in dem Fahrzeug mehrere - beispielsweise vier - Personen befinden. Die Navigationsanfrage N3 beinhaltet eine Fahrerinformation, dass nach einer Möglichkeit etwas zu essen gesucht wird und eine Fahrzeuginformation, dass sich vier Fahrzeuginsassen in dem entsprechenden Fahrzeug befinden.

Fahrzeug-Recheneinheit C2 erfasst beispielsweise über entsprechende Fahrzeug-Sensoren, dass sich in dem Fahrzeug eine (einzige) Personen befindet. Die Navigationsanfrage N2 beinhaltet eine Fahrerinformation, dass nach einer Möglichkeit etwas zu essen gesucht wird und eine Fahrzeuginformation, dass sich ein (einziger) Fahrzeuginsasse in dem entsprechenden Fahrzeug befindet.

Fahrzeug-Recheneinheit C2 erhält nun in Reaktion auf die Navigationsanfrage N2 den Angebotsort des Imbisses gemäß Angebot O2 als priorisiertes Navigationsziel (oberster Eintrag der gezeigten Liste) übermittelt.

Fahrzeug-Recheneinheit C3 erhält nun in Reaktion auf die Navigationsanfrage N3 den Angebotsort des Restaurants gemäß Angebot O1 als priorisiertes Navigationsziel (oberster Eintrag der gezeigten Liste) übermittelt.

Gemäß diesem Ausführungsbeispiel wird das priorisierte Navigationsziel also im Wesentlichen über die Anzahl der Fahrzeuginsassen gemäß den auf dem Angebotsserver S hinterlegten Angebotsparameter bestimmt.

Alternativ oder zusätzlich können die Anbieter der Angebote O1, O2, O3 auch weitere Angebotsparameter hinterlegen - beispielsweise, dass sie spezielle Fahrzeugmodelle oder Personengruppen ansprechen möchten. Ebenso können weitere Fahrer- und/oder Fahrzeuginformationen bei dem Priorisieren von Navigationszielen berücksichtigt werden.

In einer Erweiterung der Erfindung können die Angebotsparameter beispielsweise Zusatzinformationen zu weiteren Waren oder Dienstleistungen am Angebotsort umfassen, beispielsweise, dass (neben den Waren oder Dienstleistungen) eine oder mehrere Ladesäulen (am Angebotsort oder in der Nähe des Angebotsortes) vorhanden sind und/oder dass bei einem Kauf der Waren oder Dienstleistungen eine Vergünstigung erhalten wird. Eine derartige Vergünstigung kann beispielsweise ein gratis oder vergünstigtes Aufladen des Fahrzeug-Akkus oder eine gratis Tasse Kaffee sein.

Für das Priorisieren der Navigationsziele können weitere Signalwerte von Fahrzeug-Sensoren berücksichtigt werden. Ein Füllstandsensor ermittelt beispielsweise den Füllstand eines Tanks oder eines Akkus des Fahrzeugs mit Fahrzeug-Recheneinheit C1 und übermittelt diesen mit der Navigationsanfrage N1.

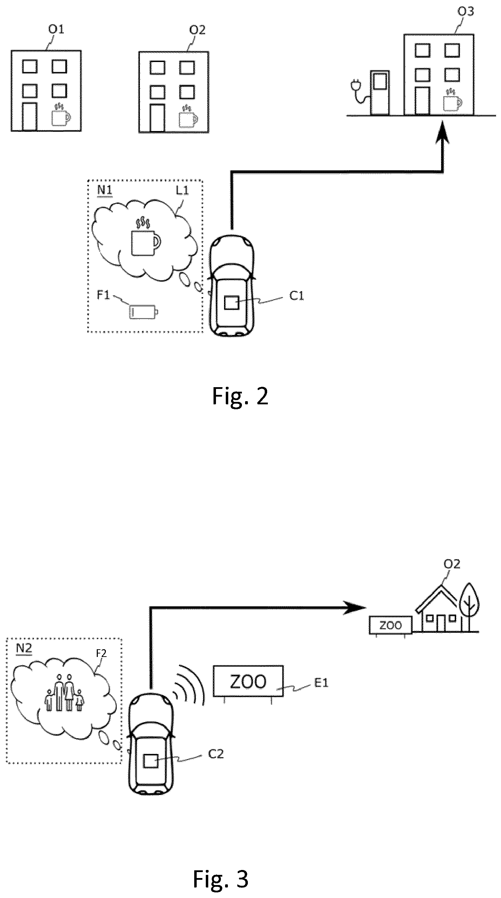

Dies ist nachfolgend genauer im Zusammenhang mit dem Ausführungsbeispiel gemäß Fig. 2 beschrieben.

In dem Ausführungsbeispiel gemäß Fig. 2 gibt der Fahrer beispielsweise an, dass er eine Kaffeepause einlegen möchte. Gleichzeitig erfasst ein Füllstandsensor des Fahrzeugs, dass der Akku-Ladezustand des Fahrzeugs gering ist und dass eine Ladung des Akkus nötig ist oder bald nötig werden wird. Die Fahrerinformation L1 umfasst also in diesem Beispiel das Bedürfnis für ein Angebot nach Kaffee. Die Fahrzeuginformation F1 umfasst eine Information, dass eine Akkuladung des Fahrzeugs nötig ist oder bald nötig werden wird. Diese Informationen werden mit der Navigationsanfrage N1 von der Fahrzeug-Recheneinheit C1 an die (in Fig. 2 nicht gezeigte) Kommunikationseinheit E übermittelt.

Obwohl die Angebote bzw. die entsprechenden Angebotsorte O1 und O2 näherliegen als das Angebot O3, bekommt der Fahrer in diesem Ausführungsbeispiel das priorisierte Navigationsziel gemäß Angebot O3 übermittelt, da der Anbieter für das Angebot O3 auf dem (hier nicht dargestellten) Angebotsserver S hinterlegt hat, dass an dem Angebotsort (oder in dessen Nähe) gemäß Angebot O3 eine Ladesäule vorhanden ist.

In einem (weiteren) Ausführungsbeispiel ist das System mit einer Transaktionserkennung ausgestattet.

Fährt der Fahrer das Angebot O3 tatsächlich an und/oder tätigt dort eine Transaktion (beispielsweise Kauf einer Tasse Kaffee und/oder Laden des Fahrzeugs) werden diese Informationen als Ergebnisinformationen von der Fahrzeug-Recheneinheit C1 an die Kommunikationseinheit E übermittelt.

Wobei die Ergebnisinformation eine mittels des Positionssensors ermittelte (GPS)-Position des Fahrzeugs (bei oder in der Nähe des Angebotsorts) umfasst. Die Ergebnisinformation wird beispielsweise von der Fahrzeug-Recheneinheit C1 übermittelt, sobald das Fahrzeug parkt und/oder der Motor abstellt wird.

Alternativ oder zusätzlich kann eine Lokalisierungszone (Geofence) um einen Angebotsort bereitgestellt sein. Derart kann eine Ergebnisinformation umfassend eine Position des Fahrzeugs übermittelt werden, sobald das Fahrzeug mittels des Positionssensors des Fahrzeugs in der Lokalisierungszone erfasst wird.

Derart kann erfasst werden, dass das Fahrzeug einen Angebotsort (tatsächlich) angefahren hat.

In einer Weiterbildung kann erneut eine Ergebnisinformation verschickt werden, sobald der Motor des Fahrzeugs wieder gestartet wird und/oder sich das Fahrzeug wieder in Bewegung setzt bzw. die Lokalisierungszone (wieder) verlässt. Darüber lässt sich auch eine Aufenthaltszeit am Angebotsort übermitteln.

Die Ergebnisinformationen können ferner eine Transaktionsinformation in Bezug auf eine am Angebotsort getätigte Transaktion (beispielsweise einen Einkauf) umfassen.

Die Transaktionsinformation kann beispielsweise über eine entsprechende App auf einem Nutzerendgerät (beispielsweise Smartphone) des Fahrers durch Interaktion des Nutzerendgeräts mit einem Bezahlsystem am Angebotsort erfasst werden.

In einem Ausführungsbeispiel wird die Transaktionsinformation durch Bezahlung mit dem Nutzerendgerät an dem Bezahlsystem am Angebotsort erfasst.

Alternativ oder zusätzlich kann der Fahrer mit dem Nutzerendgerät beispielsweise einen QR-code an dem Bezahlsystem am Angebotsort scannen und daraufhin auf seinem Nutzerendgerät auf eine Website geleitet und schließt dort die Transaktion durch eine entsprechende Bestätigung.

Alternativ oder zusätzlich kann der Fahrer über eine Fahrzeug-Interaktion (bspw. Abscannen oder Abfotografieren eines QR-Codes, der auf dem Fahrzeug-Display angezeigt wird) eine Angebotsverifizierungsinformation (beispielsweise ein QR-Code) an ein Nutzerendgerät übermitteln. Die Angebotsverifizierungsinformation kann an dem Bezahlsystem am Angebotsort verifiziert werden, beispielsweise mit einem entsprechenden Lesegerät gescannt werden. Derart kann der Fahrer ggf. auch entsprechende Vergünstigungen gemäß dem Angebot erhalten.

Die Transaktionsinformation kann entweder direkt von dem Nutzerendgerät an die Kommunikationseinheit E übermittelt werden oder (sobald der Fahrer zurück am/im Fahrzeug ist) an die Fahrzeug-Recheneinheit C2 übermittelt werden und von dieser als Ergebnisinformation an die Kommunikationseinheit E übermittelt werden.

Alternativ oder zusätzlich können die Ergebnisinformationen bzw. die Transaktionsinformationen auch anbieterseitig erfasst und an die Kommunikationseinheit E übermittelt werden. Beispielsweise durch das Kassensystem und/oder eine (unabhängige) Erkennung des Nutzerendgeräts über WLAN oder Bluetooth Signale des Nutzerendgeräts bei Betreten oder Verlassen des Angebotsortes. In einem weiteren Ausführungsbeispiel kann auch eine Gesichtserkennung des Fahrers bei Betreten oder Verlassen des Angebotsortes ermittelt werden.

Durch ein entsprechend positives oder negatives Ergebnis in Bezug auf ein Angebot oder ein priorisiertes Navigationsziel können die Fahrer- und/oder Fahrzeuginformationen entsprechend aktualisiert werden. Nachfolgende Navigationsanfragen können unter Berücksichtigung dieser Ergebnisinformation(en) optimiert werden - beispielsweise mittels eines selbstlernenden Systems der Server-Recheneinheit K - beispielsweise ein neuronales Netz. Das selbstlernende System kann anhand einer Vielzahl von Fahrerinformationen und Fahrzeuginformationen sowie Ergebnisinformationen entsprechende Fahrerprofile erzeugen und so zukünftige Navigationsziele in Bezug auf zukünftige Navigationsanfragen für Fahrer entsprechend dem jeweiligen Fahrerprofil weiter optimieren. Einerseits kann derart die Auswahl von Angeboten oder die Zuordnung eines Prioritätswertes verbessert werden. Zudem ist es möglich, ein Feedback für Anbieter der Angebote zu erstellen - derart kann ein Anbieter eine Optimierung der Angebotsparameter vornehmen.

Obiges Beispiel ist natürlich nicht auf Elektroautos mit entsprechenden Akkus beschränkt. Entsprechend lässt sich dieses Beispiel natürlich für Fahrzeuge mit Verbrennungsmotor oder Hybridmotor und Tanken statt Laden übertragen.

In einem alternativen Ausführungsbeispiel erkennt der Füllstandsensor einen (nahezu) leeren Akku und/oder einen Tank und schickt basierend auf den Sensorsignalen des Füllstandsensors (ohne weiteres Handeln des Fahrers) die Navigationsanfrage N1 an die Kommunikationseinheit E. Woraufhin der Fahrer in Reaktion auf die Navigationsanfrage N1 ein priorisiertes Navigationsziel gemäß Angebot O3 erhält, da dort eine Zapf- oder Ladesäule vorhanden ist. Beispielsweise kann der Fahrer hierbei auch zusätzlich vorgeschlagen/angezeigt bekommen, gemäß Angebot O3 bei Kauf eines Kaffees ein vergünstigtes Laden zu erhalten.

Weiterhin beinhaltet eine Erweiterung der Erfindung ebenso, dass ein autonom fahrendes Fahrzeug den Angebotsort gemäß Angebot O3 selbstständig ansteuert, wenn in Reaktion auf die Navigationsanfrage N1 eine Navigation zu dem priorisierten Navigationsziel initialisiert wird.

In Fig. 3 ist ein alternatives Ausführungsbeispiel der vorliegenden Erfindung dargestellt.

Die Fahrzeug-Recheneinheit C2 erfasst und erkennt ein Objekt E1 in der Fahrzeugumgebung (beispielsweise am Straßenrand) mit einem optischen Sensor. Gemäß dem Ausführungsbeispiel erkennt die Fahrzeug-Recheneinheit C2 beispielsweise ein Werbeplakat für eine nahegelegene Attraktion - beispielsweise einen Zoo. Gleichzeitig erkennt die Fahrzeug-Recheneinheit C2 mittels Kraftsensoren in den Sitzen des Fahrzeugs vier Insassen - beispielsweise eine Familie. Die Fahrzeug-Recheneinheit C2 übersendet eine Navigationsanfrage N2 in Reaktion auf eine Erkennung eines Objekts E1 durch einen optischen Sensor des Fahrzeugs in der Fahrzeugumgebung an die (nicht gezeigte) Kommunikationseinheit E und übermittelt dabei die Fahrzeuginformation F2 mit der Navigationsanfrage N2 in Bezug auf die Insassen und/oder dass es sich bei dem Fahrzeug um ein Familienfahrzeug (beispielsweise Minivan) handelt.

Auf dem (hier nicht gezeigten) Angebotsserver S ist ein Angebot O2 hinterlegt, für das das Objekt E1 wirbt. Das Objekt E1 kann dabei beispielsweise ein Plakat mit einer entsprechenden maschinenlesbaren Codierung sein.

Das Angebot O2 umfasst dabei mindestens einen Angebotsparameter, der Informationen enthält, dass das Angebot O2 auf Familien gerichtet ist und/oder auf Fahrer von Familienfahrzeugen gerichtet ist.

Der Fahrer bekommt in Reaktion auf die Navigationsanfrage N2 als priorisiertes Navigationsziel Angebot O2 von der Recheneinheit übermittelt und ggf. graphisch dargestellt und kann eine Navigation zu dem Angebotsort des Angebots O2 initialisieren.

Fährt der Fahrer das Angebot O2 tatsächlich an und hält sich länger an dem Angebotsort auf, wird diese Information (beispielsweise Parkzeit 4 Stunden) als Ergebnisinformation an die Kommunikationseinheit E übermittelt.

Durch ein entsprechend positives oder negatives Ergebnis können die Fahrer- und/oder Fahrzeuginformationen entsprechend aktualisiert werden. Nachfolgende Navigationsanfragen können unter Berücksichtigung dieser Ergebnisinformation(en) optimiert werden. Einerseits kann derart die Auswahl von Angeboten oder die Zuordnung eines Prioritätswertes verbessert werden. Zudem ist es möglich, ein Feedback für Anbieter der Angebote zu erstellen - derart kann ein Anbieter eine Optimierung der Angebotsparameter vornehmen.

Hätte die Fahrzeug-Recheneinheit C2 alternativ beispielsweise die Fahrzeuginformation F2 übermittelt, dass sich nur ein einzelner Fahrzeuginsasse in dem Fahrzeug befindet und/oder dass das Fahrzeug ein Sportwagen (und kein Familienfahrzeug) ist, wäre dem Fahrer das auf Familien gerichtete Angebot O2 in Reaktion auf die Erkennung des Objekts E1 tendenziell nicht angezeigt/vorgeschlagen worden, da ein niedriger Prioritätswert ermittelt worden wäre.

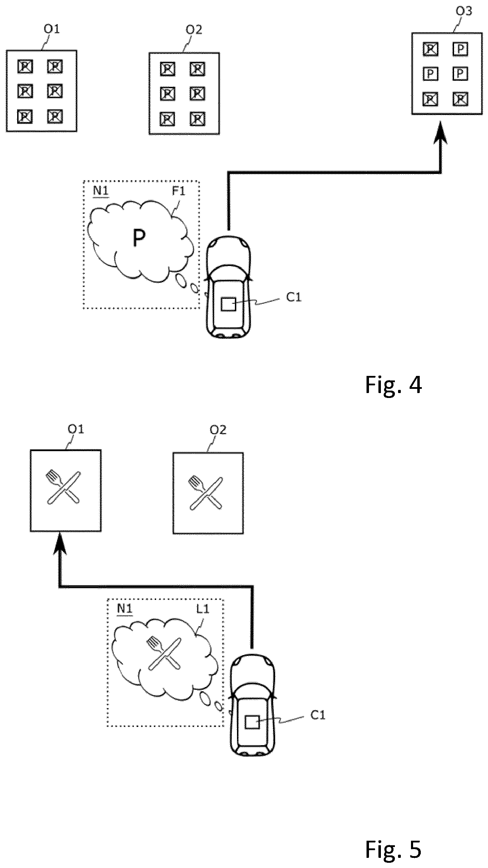

In Fig. 4 ist ein weiteres Ausführungsbeispiel der vorliegenden Erfindung dargestellt.

In dem Ausführungsbeispiel gemäß Fig. 4 ist ein autonom fahrendes (fahrerloses) Fahrzeug mit einer Fahrzeug-Recheneinheit C1 dargestellt.

In diesem Ausführungsbeispiel befindet sich kein Fahrer oder Fahrzeuginsasse in dem Fahrzeug. Beispielsweise haben der Fahrzeuginsasse oder die Fahrzeuginsassen das Fahrzeug an einem Angebotsort verlassen. Das Fahrzeug soll in diesem Ausführungsbeispiel autonom in eine Parkposition gebracht werden.

Gemäß dem Ausführungsbeispiel kann die Fahrzeug-Recheneinheit C1 eine Navigationsanfrage N1 an die (nicht gezeigte) Kommunikationseinheit E übermitteln. Die Navigationsanfrage N1 umfasst die Fahrzeuginformation F1, die angibt, dass für das Fahrzeug einen Parkplatz P gesucht/benötigt wird.

Verschiedene Parkplatz- oder Parkhausanbieter haben auf dem (nicht gezeigten) Angebotsserver S ihre jeweiligen (Parkplatz-)Angebote O1, O2 und O3 hinterlegt. Die Angebote O1, O2, O3 umfassen Angebotsparameter, die eine Parkplatzkapazität am jeweiligen Angebotsort (Parkplatz oder Parkhaus) umfassen.

In dem Ausführungsbeispiel gemäß Fig. 4 wird als priorisiertes Navigationsziel das Parkhaus gemäß Angebot O3 an die Fahrzeug-Recheneinheit C1 übermittelt, da an dem Angebotsort gemäß Angebot O3 Parkplätze verfügbar sind.

Basierend auf dem priorisierten Navigationsziel kann die Fahrzeug-Recheneinheit C1 eine Navigation zu dem entsprechenden Angebotsort gemäß Angebot O3 initialisieren, um das Fahrzeug dort zu parken.

In einer Erweiterung der Erfindung kann die Fahrzeug-Recheneinheit C1 eine Reservierungsinformation an die Kommunikationseinheit E übermitteln, so dass basierend darauf mindestens ein Parkplatz P am entsprechenden Angebotsort bis zum Eintreffen des Fahrzeugs freigehalten wird. Derart kann eine autonome Parkplatzsuche effizient und einfach erfolgen.

Alternativ oder zusätzlich können die Angebotsparameter auch Parkgebühren oder entsprechende Entfernungen von dem Angebotsort umfassen, so dass jeweils zwischen einer Parkplatzverfügbarkeit, einer Entfernung und Parkplatzgebühren abgewogen wird, um das Navigationsziel zu priorisieren.

In einer Erweiterung der Erfindung können die Anbieter auch dynamische Angebotsparameter für ein entsprechendes Angebot auf dem Angebotsserver S hinterlegen.

Wobei unter einem dynamischen Angebotsparameter zu verstehen ist, dass er sich in Abhängigkeit von mindestens einer (durch den Anbieter zu definierenden) Größe ändert.

In dem Ausführungsspiel gemäß Fig. 4 könnte ein dynamischer Angebotsparameter beispielsweise eine (dynamische) Parkplatzgebühr umfassen, die in Abhängigkeit von einer Uhrzeit oder einer Jahreszeit oder mit einer Anzahl an verfügbaren (freien) Parkplätzen variiert.

Beispielsweise können so unterausgelastete Parkplätze ihre Parkgebühren senken, um einen Anreiz zu setzen, dass Angebotsort gemäß Angebot O3 (auch) angefahren (priorisiert) werden würde, selbst wenn Angebotsort gemäß Angebot O2 auch freie Parkplätze hätte.

In Fig. 5 ist ein weiteres Ausführungsbeispiel der vorliegenden Erfindung dargestellt.

In dem Ausführungsbeispiel gemäß Fig. 5 ist ein, vorzugsweise autonom fahrendes, Fahrzeug mit einer Fahrzeug-Recheneinheit C1 dargestellt. Das Fahrzeug ist in diesem Ausführungsbeispiel beispielsweise ein Fahrzeug einer Fahrzeug-Flotte eines Car-Sharing-Anbieters oder eines Personenbeförderungsdienstleisters.

Ein Nutzer des Car-Sharing-Anbieters oder des Personenbeförderungsdienstleisters kann sich das Fahrzeug mieten. Gemäß diesem Ausführungsbeispiel befindet sich ein Fahrzeuginsasse in dem, vorzugsweise autonom fahrenden, Fahrzeug.

In diesem Ausführungsbeispiel haben zwei Restaurantbetreiber jeweils ein entsprechendes Angebot O1, O2 für ihr Restaurant auf dem (nicht gezeigten) Angebotsserver S hinterlegt.

Angebot O1 umfasst einen Angebotsparameter, der angibt, dass für Nutzer bzw. Fahrzeuginsassen eines Fahrzeugs eines Car-Sharing-Anbieters oder eines Personenbeförderungsdienstleisters die Fahrtkosten (Miete für das Fahrzeug oder Streckenkosten) für ein Essen in dem Restaurant gemäß Angebot O1 erstattet bzw. übernommen werden. Angebot O1 umfasst folglich einen Angebotsparameter der auf eine Gratis-Anfahrt zu dem Angebotsort gerichtet ist
- beispielsweise für Fahrzeuge in einem Umkreis von 5 km oder 10 km oder 50 km um den Angebotsort. Erfindungsgemäß können hierfür weitere Angebotsparameter definiert werden.

Ein Nutzer bzw. Fahrzeuginsasse des Fahrzeugs versendet eine Navigationsanfrage N1 mit der Fahrzeug-Recheneinheit C1 an die (nicht gezeigte) Kommunikationseinheit E. Die Navigationsanfrage N1 beinhaltet in diesem Ausführungsbeispiel eine Fahrerinformation L1, dass nach einer Möglichkeit etwas zu essen gesucht wird.

Unter Umständen können weitere Fahrer- und/oder Fahrzeuginformationen übermittelt und berücksichtigt werden - hierzu wird explizit auf die vorhergehenden Ausführungsbeispiele verwiesen.

In Reaktion auf die Navigationsanfrage N1 wird das Restaurant gemäß Angebot O1 dem Fahrzeuginsassen als priorisiertes Navigationsziel angezeigt. Alternativ oder zusätzlich kann direkt eine Navigation zu dem Angebotsort gemäß Angebot O1 initialisiert werden.

Nachfolgend werden weitere bevorzugte Ausführungsformen gemäß der Erfindung beschrieben:

### Ausführungsform 1:

System zum Priorisieren von Navigationszielen von Fahrzeugen, Folgendes aufweisend:
- eine Kommunikationseinheit (E), die dazu ausgebildet ist, mindestens eine Navigationsanfrage (N1, N2, N3) von mindestens einer Fahrzeug-Recheneinheit (C1, C2, C3) zu empfangen, wobei der mindestens einen Navigationsanfrage (N1, N2, N3) mindestens eine Fahrzeug (F1)- und/oder Fahrerinformation (L1) zugeordnet ist,
- einen Angebotsserver (S), auf dem eine Vielzahl von Angeboten (O1, O2, O3) gespeichert sind, wobei jeweils einem Angebot (O1, O2, O3) eine Vielzahl von Angebotsparametern, umfassend einen Angebotsort, zugeordnet sind;
- eine Server-Recheneinheit (K), die dazu ausgebildet ist,
   a) eine Auswahl von Angeboten basierend auf der Navigationsanfrage (N1, N2, N3) zu bestimmen;
   b) den Angeboten der Auswahl von Angeboten unter Berücksichtigung der Angebotsparameter und mindestens einer Fahrzeug- und/oder Fahrerinformation der Navigationsanfrage (N1, N2, N3) einen Prioritätswert zuzuordnen; und
   c) die zugeordneten Prioritätswerte in Reaktion auf die Navigationsanfrage (N1, N2, N3) an die mindestens eine Fahrzeug-Recheneinheit (C1, C2, C3) zu senden, um die mindestens eine Fahrzeug-Recheneinheit (C1, C2, C3) dazu zu veranlassen, mindestens ein Navigationsziel unter Nutzung des Prioritätswerts zu priorisieren.

### Ausführungsform 2:

System zum Priorisieren von Navigationszielen von Fahrzeugen nach Ausführungsform 1, wobei die Kommunikationseinheit (E) ferner dazu ausgebildet ist, Ergebnisinformationen von der mindestens einen Fahrzeug-Recheneinheit (C1, C2, C3) zu empfangen, wobei die Ergebnisinformationen insbesondere Informationen umfassen, die angeben, ob ein entsprechendes Fahrzeug einen Angebotsort eines entsprechenden Angebotes (O1, O2, O3) angefahren hat, und/oder entsprechende Aufenthaltszeiten an dem Angebotsort angeben, und/oder angeben, ob eine Transaktion an dem Angebotszielort getätigt wurde.

### Ausführungsform 3:

System zum Priorisieren von Navigationszielen von Fahrzeugen nach Ausführungsform 1 oder 2, umfassend: Fahrzeuge mit jeweils mindestens einer Fahrzeug-Recheneinheit (C1, C2, C3).

### Ausführungsform 4:

System zum Priorisieren von Navigationszielen von Fahrzeugen nach einer der Ausführungsformen 1 bis 3, insbesondere nach Ausführungsform 2 oder 3, wobei die mindestens eine Fahrzeug-Recheneinheit (C1, C2, C3) dazu ausgebildet ist, Sensorsignale von Fahrzeug-Sensoren zu erfassen und/oder auszuwerten und basierend auf den Sensorsignalen die Ergebnisinformationen zu bestimmen, und die Ergebnisinformationen an die Kommunikationseinheit (E) zu übermitteln.

### Ausführungsform 5:

System zum Priorisieren von Navigationszielen von Fahrzeugen nach einer der Ausführungsformen 1 bis 4, wobei das Fahrzeug Fahrzeug-Sensoren umfasst, beispielsweise Positionssensoren, Füllstandsensoren, Kraftsensoren, und die mindestens eine Fahrzeug-Recheneinheit (C1, C2, C3) dazu ausgebildet ist, die Fahrzeuginformationen (F1) und/oder die Fahrerinformationen (L1) zumindest teilweise unter Verwendung von Sensorsignalen mindestens eines der Fahrzeug-Sensoren zu übermitteln.

### Ausführungsform 6:

System zum Priorisieren von Navigationszielen von Fahrzeugen nach einer der Ausführungsformen 1 bis 5, wobei die Server-Recheneinheit (K) und/oder die mindestens eine Fahrzeug-Recheneinheit (C1, C2, C3) dazu ausgebildet ist/sind, die Vielzahl von Angeboten (O1, O2, O3) entsprechend dem jeweiligen Prioritätswert zu filtern, derart, dass nur Angebote (O1, O2, O3) und/oder Prioritätswerte über einer Prioritätswertgrenze beim Senden an die Fahrzeug-Recheneinheit (C1, C2, C3) berücksichtigt werden.

### Ausführungsform 7:

System zum Priorisieren von Navigationszielen von Fahrzeugen nach einer der Ausführungsformen 1 bis 6, wobei die mindestens eine Fahrzeug-Recheneinheit (C1, C2, C3) dazu ausgebildet ist, eine Angebotsverifizierungsinformation an ein Nutzerendgerät zu übermitteln, derart, dass eine Transaktion an dem Angebotsort, insbesondere an einer Kasse an dem Angebotsort, außerhalb des Fahrzeugs durch einen Anbieter verifiziert werden kann.

### Ausführungsform 8:

System zum Priorisieren von Navigationszielen von Fahrzeugen nach einer der Ausführungsformen 1 bis 7, wobei die Fahrzeugrecheneinheit (C1, C2, C3) dazu ausgebildet ist, eine Fahrzeug-Interaktionsvorrichtung dazu zu veranlassen, mindestens ein priorisiertes Navigationsziel, und vorzugsweise eine Angebotsinformation, darzustellen, insbesondere derart, dass das mindestens eine priorisierte Navigationsziel mittels der Fahrzeug-Interaktionsvorrichtung auswählbar ist, um eine Navigation zu einem priorisierten Navigationsziel zu initialisieren.

### Ausführungsform 9:

System zum Priorisieren von Navigationszielen von Fahrzeugen nach einer der Ausführungsformen 1 bis 8, wobei die mindestens eine Fahrzeug-Recheneinheit (C1, C2, C3) dazu ausgebildet ist, Sensorsignale von Fahrzeug-Sensoren, beispielsweise akustische oder optische Sensoren und/oder Müdigkeitssensoren und/oder Füllstandsensoren, zu erfassen und/oder auszuwerten und basierend auf den Sensorsignalen mindestens eine Navigationsanfrage (N1, N2, N3) an die Kommunikationseinheit (E) zu senden,
und/oder
wobei die Fahrzeug-Recheneinheit (C1, C2, C3) dazu ausgebildet ist, basierend auf den Sensorsignalen mindestens eines der Fahrzeug-Sensoren eine Fahrgastmüdigkeit zu erkennen und/oder einen Tank- oder Ladezustand zu erkennen und/oder ein Objekt (E2) in der Umgebung des Fahrzeugs zu erkennen und/oder ein Reizwort in dem Fahrgastraum zu erkennen.

### Ausführungsform 10:

Verfahren zum Priorisieren von Navigationszielen von Fahrzeugen, umfassend folgende Schritte:
- Empfangen mindestens einer Navigationsanfrage (N1, N2, N3) von mindestens einer Fahrzeug-Recheneinheit (C1, C2, C3) eines Fahrzeugs, wobei der mindestens einen Navigationsanfrage (N1, N2, N3) mindestens eine Fahrzeug (F1)- und/oder Fahrerinformationen (L1) zugeordnet ist, mittels einer Kommunikationseinheit (E)
- Bereitstellen einer Vielzahl von Angeboten (O1, O2, O3) auf einem Angebotsserver (S), wobei jeweils einem Angebot (O1, O2, O3) eine Vielzahl von Angebotsparametern, umfassend einen Angebotsort, zugeordnet sind;
- Bestimmen einer Auswahl von Angeboten basierend auf der mindestens einen Navigationsanfrage (N1, N2, N3);
- Zuordnen von Prioritätswerten, unter Berücksichtigung der Angebotsparameter und mindestens einer Fahrzeug- und/oder Fahrerinformationen der Navigationsanfrage (N1, N2, N3), zu den Angeboten der Auswahl von Angeboten;
- Senden der zugeordneten Prioritätswerte in Reaktion auf die Navigationsanfrage (N1, N2, N3) an die mindestens eine Fahrzeug-Recheneinheit (C1, C2, C3);
- Priorisieren eines Navigationsziels unter Nutzung der Prioritätswerte.

### Ausführungsform 11:

Verfahren zum Priorisieren von Navigationszielen von Fahrzeugen nach Ausführungsform 10, umfassend einen Schritt zum Empfangen von Ergebnisinformationen von der mindestens einen Fahrzeug-Recheneinheit (C1, C2, C3) mit der Kommunikationseinheit (E), wobei die Ergebnisinformationen insbesondere Informationen umfassen, die angeben, ob ein entsprechendes Fahrzeug einen Angebotsort eines entsprechenden Angebotes (O1, O2, O3) angefahren hat, und/oder entsprechende Aufenthaltszeiten an dem Angebotsort angeben, und/oder angeben, ob eine Transaktion an dem Angebotszielort getätigt wurde.

### Ausführungsform 12:

Verfahren zum Priorisieren von Navigationszielen von Fahrzeugen nach einer der Ausführungsformen 10 oder 11, wobei die mindestens eine Navigationsanfrage (N1, N2, N3) in Reaktion auf eine durch einen Müdigkeitssensor erkannte Fahrgastmüdigkeit und/oder durch einen akustischen Sensor erkanntes akustisches Signal bzw. Signalfolge, insbesondere Reizwort im Fahrgastraum, versendet wird.

### Ausführungsform 13:

Verfahren zum Priorisieren von Navigationszielen von Fahrzeugen nach einer der Ausführungsformen 10 bis 12, wobei die mindestens eine Navigationsanfrage (N1, N2, N3) in Reaktion auf eine Erkennung eines Objekts (E2) durch einen optischen Sensor in der Fahrzeugumgebung versendet wird.

### Ausführungsform 14:

Verfahren zum Priorisieren von Navigationszielen von Fahrzeugen nach einer der Ausführungsformen 10 bis 13, wobei die mindestens eine Navigationsanfrage (N1, N2, N3) in Reaktion auf eine durch einen Füllstandsensor erkannten geringen Akkuladezustand und/oder geringen Tankfüllzustand versendet wird.

### Ausführungsform 15:

Computerlesbares (Speicher)medium, umfassend Instruktionen, die bei der Ausführung durch mindestens eine Recheneinheit diese veranlassen, ein Verfahren nach einer der Ausführungsformen 10 bis 14 zu implementieren.

An dieser Stelle sei darauf hingewiesen, dass alle oben beschriebenen Teile für sich alleine gesehen und in jeder Kombination, insbesondere der in den Zeichnungen dargestellten Details als erfindungswesentlich beansprucht werden.

### Bezugszeichenliste:

- E: Kommunikationseinheit
- N1, N2, N3: Navigationsanfragen
- C1, C2, C3: Fahrzeug-Recheneinheiten
- F1, F2: Fahrzeuginformation
- L1: Fahrerinformation
- S: Angebotsserver
- O1, O2, O3: Angebote
- K: (Server-)Recheneinheit
- E1: Objekt

## Patentansprüche

1. System zum Priorisieren von Navigationszielen von Fahrzeugen, Folgendes aufweisend:
- eine Kommunikationseinheit (E), die dazu ausgebildet ist, mindestens eine Navigationsanfrage (N1, N2, N3) von mindestens einer Fahrzeug-Recheneinheit (C1, C2, C3) zu empfangen, wobei der mindestens einen Navigationsanfrage (N1, N2, N3) mindestens eine Fahrzeug (F1)- und/oder Fahrerinformation (L1) zugeordnet ist,
- einen Angebotsserver (S), auf dem eine Vielzahl von Angeboten (O1, O2, O3) gespeichert sind, wobei jeweils einem Angebot (O1, O2, O3) eine Vielzahl von Angebotsparametern, umfassend einen Angebotsort, zugeordnet sind;
- eine Server-Recheneinheit (K), die dazu ausgebildet ist,
a) eine Auswahl von Angeboten basierend auf der Navigationsanfrage (N1, N2, N3) zu bestimmen;
b) den Angeboten der Auswahl von Angeboten unter Berücksichtigung der Angebotsparameter und mindestens einer Fahrzeug- und/oder Fahrerinformation der Navigationsanfrage (N1, N2, N3) einen Prioritätswert zuzuordnen; und
c) die zugeordneten Prioritätswerte in Reaktion auf die Navigationsanfrage (N1, N2, N3) an die mindestens eine Fahrzeug-Recheneinheit (C1, C2, C3) zu senden, um die mindestens eine Fahrzeug-Recheneinheit (C1, C2, C3) dazu zu veranlassen, mindestens ein Navigationsziel unter Nutzung des Prioritätswerts zu priorisieren,
wobei das System autonome Fahrzeuge mit jeweils mindestens einer Fahrzeug-Recheneinheit (C1, C2, C3) umfasst;
wobei die mindestens eine Navigationsanfrage (N1, N2, N3) eine Fahrzeuginformation (F1) umfasst, die angibt, dass ein Parkplatz (P) für ein Fahrzeug benötigt wird,
wobei die Angebotsparameter der Angebote (O1, O2, O3) eine Parkplatzkapazität an dem jeweiligen Angebotsort umfassen,
wobei die mindestens eine Fahrzeug-Recheneinheit (C1, C2, C3) ausgebildet ist, basierend auf dem priorisierten Navigationsziel, eine Navigation zu einem entsprechenden Angebotsort gemäß einem Angebot (O3) mit verfügbaren Parkplätzen zu initialisieren, um das Fahrzeug dort zu parken.

2. System zum Priorisieren von Navigationszielen von Fahrzeugen nach Anspruch 1,
wobei die Kommunikationseinheit (E) ferner dazu ausgebildet ist, Ergebnisinformationen von der mindestens einen Fahrzeug-Recheneinheit (C1, C2, C3) zu empfangen, wobei die Ergebnisinformationen insbesondere Informationen umfassen, die angeben, ob ein entsprechendes Fahrzeug einen Angebotsort eines entsprechenden Angebotes (O1, O2, O3) angefahren hat, und/oder entsprechende Aufenthaltszeiten an dem Angebotsort angeben, und/oder angeben, ob eine Transaktion an dem Angebotszielort getätigt wurde.

3. System zum Priorisieren von Navigationszielen von Fahrzeugen nach einem der vorhergehenden Ansprüche, insbesondere nach Anspruch 2,
wobei die mindestens eine Fahrzeug-Recheneinheit (C1, C2, C3) dazu ausgebildet ist, Sensorsignale von Fahrzeug-Sensoren zu erfassen und/oder auszuwerten und basierend auf den Sensorsignalen die Ergebnisinformationen zu bestimmen, und die Ergebnisinformationen an die Kommunikationseinheit (E) zu übermitteln.

4. System zum Priorisieren von Navigationszielen von Fahrzeugen nach einem der vorhergehenden Ansprüche,
wobei das Fahrzeug Fahrzeug-Sensoren umfasst, beispielsweise Positionssensoren, Füllstandsensoren, Kraftsensoren, und die mindestens eine Fahrzeug-Recheneinheit (C1, C2, C3) dazu ausgebildet ist, die Fahrzeuginformationen (F1) und/oder die Fahrerinformationen (L1) zumindest teilweise unter Verwendung von Sensorsignalen mindestens eines der Fahrzeug-Sensoren zu übermitteln.

5. System zum Priorisieren von Navigationszielen von Fahrzeugen nach einem der vorhergehenden Ansprüche,
wobei die Server-Recheneinheit (K) und/oder die mindestens eine Fahrzeug-Recheneinheit (C1, C2, C3) dazu ausgebildet ist/sind, die Vielzahl von Angeboten (O1, O2, O3) entsprechend dem jeweiligen Prioritätswert zu filtern, derart, dass nur Angebote (O1, O2, O3) und/oder Prioritätswerte über einer Prioritätswertgrenze beim Senden an die Fahrzeug-Recheneinheit (C1, C2, C3) berücksichtigt werden.

6. System zum Priorisieren von Navigationszielen von Fahrzeugen nach einem der vorhergehenden Ansprüche,
wobei die mindestens eine Fahrzeug-Recheneinheit (C1, C2, C3) dazu ausgebildet ist, eine Angebotsverifizierungsinformation an ein Nutzerendgerät zu übermitteln, derart, dass eine Transaktion an dem Angebotsort, insbesondere an einer Kasse an dem Angebotsort, außerhalb des Fahrzeugs durch einen Anbieter verifiziert werden kann.

7. System zum Priorisieren von Navigationszielen von Fahrzeugen nach einem der vorhergehenden Ansprüche,
wobei die Fahrzeugrecheneinheit (C1, C2, C3) dazu ausgebildet ist, eine Fahrzeug-Interaktionsvorrichtung dazu zu veranlassen, mindestens ein priorisiertes Navigationsziel, und vorzugsweise eine Angebotsinformation, darzustellen, insbesondere derart, dass das mindestens eine priorisierte Navigationsziel mittels der Fahrzeug-Interaktionsvorrichtung auswählbar ist, um eine Navigation zu einem priorisierten Navigationsziel zu initialisieren.

8. System zum Priorisieren von Navigationszielen von Fahrzeugen nach einem der vorhergehenden Ansprüche,
wobei die mindestens eine Fahrzeug-Recheneinheit (C1, C2, C3) dazu ausgebildet ist, Sensorsignale von Fahrzeug-Sensoren, beispielsweise akustische oder optische Sensoren und/oder Müdigkeitssensoren und/oder Füllstandsensoren, zu erfassen und/oder auszuwerten und basierend auf den Sensorsignalen mindestens eine Navigationsanfrage (N1, N2, N3) an die Kommunikationseinheit (E) zu senden,
und/oder
wobei die Fahrzeug-Recheneinheit (C1, C2, C3) dazu ausgebildet ist, basierend auf den Sensorsignalen mindestens eines der Fahrzeug-Sensoren eine Fahrgastmüdigkeit zu erkennen und/oder einen Tank- oder Ladezustand zu erkennen und/oder ein Objekt (E2) in der Umgebung des Fahrzeugs zu erkennen und/oder ein Reizwort in dem Fahrgastraum zu erkennen.

9. Verfahren zum Priorisieren von Navigationszielen von Fahrzeugen, umfassend folgende Schritte:
- Empfangen mindestens einer Navigationsanfrage (N1, N2, N3) von mindestens einer Fahrzeug-Recheneinheit (C1, C2, C3) eines Fahrzeugs, wobei der mindestens einen Navigationsanfrage (N1, N2, N3) mindestens eine Fahrzeug (F1)- und/oder Fahrerinformationen (L1) zugeordnet ist, mittels einer Kommunikationseinheit (E)
- Bereitstellen einer Vielzahl von Angeboten (O1, O2, O3) auf einem Angebotsserver (S), wobei jeweils einem Angebot (O1, O2, O3) eine Vielzahl von Angebotsparametern, umfassend einen Angebotsort, zugeordnet sind;
- Bestimmen einer Auswahl von Angeboten basierend auf der mindestens einen Navigationsanfrage (N1, N2, N3);
- Zuordnen von Prioritätswerten, unter Berücksichtigung der Angebotsparameter und mindestens einer Fahrzeug- und/oder Fahrerinformationen der Navigationsanfrage (N1, N2, N3), zu den Angeboten der Auswahl von Angeboten;
- Senden der zugeordneten Prioritätswerte in Reaktion auf die Navigationsanfrage (N1, N2, N3) an die mindestens eine Fahrzeug-Recheneinheit (C1, C2, C3);
- Priorisieren eines Navigationsziels unter Nutzung der Prioritätswerte
- wobei die mindestens eine Navigationsanfrage (N1, N2, N3) eine Fahrzeuginformation (F1) umfasst, die angibt, dass ein Parkplatz (P) für ein Fahrzeug benötigt wird,
- wobei die Angebotsparameter der Angebote (O1, O2, O3) eine Parkplatzkapazität an dem jeweiligen Angebotsort umfassen,
- wobei die mindestens eine Fahrzeug-Recheneinheit (C1, C2, C3) ausgebildet ist, basierend auf dem priorisierten Navigationsziel, eine Navigation zu einem entsprechenden Angebotsort gemäß einem Angebot (O3) mit verfügbaren Parkplätzen zu initialisieren, um das Fahrzeug dort zu parken.

10. Verfahren zum Priorisieren von Navigationszielen von Fahrzeugen nach Anspruch 9,
umfassend einen Schritt zum Empfangen von Ergebnisinformationen von der mindestens einen Fahrzeug-Recheneinheit (C1, C2, C3) mit der Kommunikationseinheit (E), wobei die Ergebnisinformationen insbesondere Informationen umfassen, die angeben, ob ein entsprechendes Fahrzeug einen Angebotsort eines entsprechenden Angebotes (O1, O2, O3) angefahren hat, und/oder entsprechende Aufenthaltszeiten an dem Angebotsort angeben, und/oder angeben, ob eine Transaktion an dem Angebotszielort getätigt wurde.

11. Verfahren zum Priorisieren von Navigationszielen von Fahrzeugen nach Anspruch 9 oder 10,
wobei die mindestens eine Navigationsanfrage (N1, N2, N3) in Reaktion auf eine durch einen Müdigkeitssensor erkannte Fahrgastmüdigkeit und/oder durch einen akustischen Sensor erkanntes akustisches Signal bzw. Signalfolge, insbesondere Reizwort im Fahrgastraum, versendet wird.

12. Verfahren zum Priorisieren von Navigationszielen von Fahrzeugen nach einem der Ansprüche 9 bis 11,
wobei die mindestens eine Navigationsanfrage (N1, N2, N3) in Reaktion auf eine Erkennung eines Objekts (E2) durch einen optischen Sensor in der Fahrzeugumgebung versendet wird.

13. Verfahren zum Priorisieren von Navigationszielen von Fahrzeugen nach einem der Ansprüche 9 bis 12,
wobei die mindestens eine Navigationsanfrage (N1, N2, N3) in Reaktion auf eine durch einen Füllstandsensor erkannten geringen Akkuladezustand und/oder geringen Tankfüllzustand versendet wird.

14. Computerlesbares (Speicher)medium, umfassend Instruktionen, die bei der Ausführung durch mindestens eine Recheneinheit diese veranlassen, ein Verfahren nach einem der Ansprüche 9 bis 13 zu implementieren.
